# FASCICULE DE BREVET EUROPEEN

(11) **EP 0 592 276 B1**
(45) Date de publication et mention de la délivrance du brevet: **07.05.1997**
(21) Numéro de dépôt: 93402351.6
(22) Date de dépôt: 27.09.1993
(51) Int. Cl.: B65G 65/46, B65G 65/36

(54) **Dispositif d'extraction et aire de stockage équipée d'un tel dispositif**
Austragvorrichtung und mit dieser Vorrichtung ausgerüsteter Lagerplatz
Discharging device and storage area provided with such a device

(30) Priorité: 05.10.1992 FR 9212310
(43) Date de publication de la demande: 13.04.1994
(73) Titulaire: JMC (S.A.), 62170 Wailly Beaucamp (FR); COMET (S.A.), 78150 Le Chesnay (FR); Suratteau, Albert, 78150 Rocquencourt (FR)
(72) Inventeur: Courtois, Jean-Marie, F-62170 Wailly Beaucamp (FR); Suratteau, Albert, F-78150 Rocquencourt (FR)
(74) Mandataire: Hénnion, Jean-Claude

(56) Documents cités:
- EP-A- 0 471 136
- DE-A- 2 019 927
- FR-A- 1 501 174

## Description

La présente invention concerne l'extraction d'un produit en vrac, du type sucre en vrac, clinker, cendres volantes..., stocké sur une aire de stockage comportant au moins une ouverture d'évacuation principale. Elle a plus particulièrement pour objet un dispositif d'extraction qui est constitué d'un arbre racleur inclinable, et destiné à être monté rotatif selon un axe vertical au-dessus de l'ouverture d'évacuation d'une aire de stockage, ainsi qu'une aire de stockage équipée d'un tel dispositif d'extraction.

Dans le présent texte, le terme aire de stockage désigne toute surface susceptible d'être utilisée pour l'entreposage d'un produit en vrac. Il peut s'agir d'une surface ouverte, ou au contraire d'une surface délimitée par des parois latérales. Plus particulièrement, l'aire de stockage peut être constituée par le fond d'un réservoir de stockage. La présente invention trouve particulièrement son application dans l'extraction d'un produit en vrac stocké dans un silo, dont le fond constitue une aire de stockage particulière.

On connaît déjà, notamment par le document EP.O.471.136, un dispositif d'extraction d'un produit en vrac stocké dans un silo comportant une ouverture d'évacuation centrale. Ce dispositif d'extraction est constitué d'un mât central vertical, entraîné en rotation sur lui-même, d'un support inclinable par rapport au mât central, et d'une vis d'Archimède montée sur le support, et entraînée en rotation sur elle-même. La base du support est fixée au mât central vertical par l'intermédiaire d'une liaison pivot d'axe horizontal, et le réglage de l'inclinaison du support , et par là-même de la vis d'Archimède, est réalisé à l'aide d'un câble de suspension dont une extrémité est fixée au support inclinable, et dont l'autre extrémité s'enroule autour d'un treuil fixé au sommet du mât central, à proximité du sommet du silo.

Préalablement au remplissage du silo, le support et la vis d'Archimède sont maintenus en équilibre, par l'intermédiaire du câble, sensiblement le long du mât central. Ensuite , pour procéder au vidage du silo on commence par mettre en rotation la vis d'Archimède sur elle-même ce qui a pour effet de la dégager, puis on met en rotation le mât central sur lui-même, ce qui provoque la rotation du support et de la vis d'Archimède autour de l'axe central du silo. Enfin, on augmente progressivement l'angle d'inclinaison du support et de la vis d'Archimède par rapport au mât central, en déroulant le câble de suspension. De la sorte , la vis d'Archimède travaille à la surface du produit stocké, selon un cône de renversement de plus en plus important au fur et à mesure que l'angle d'inclinaison de la vis d'Archimède par rapport au mât central augmente, et pousse le produit en direction de l'ouverture centrale d'évacuation. La vis d'Archimède ne travaillant pas dans la masse du produit, à l'exception du démarrage, la puissance installée nécessaire pour le fonctionnement de ce dispositif d'extraction, est fonction notamment de la dimension et de la masse de la vis d'Archimède et du support, et dépend très peu de la masse du produit à extraire.

Cependant ce dispositif d'extraction présente les inconvénients suivants. Préalablement au remplissage du silo, le support et la vis d'Archimède , à cause de leur articulation par rapport au mât central, ne peuvent être positionnés dans un plan strictement vertical. Par conséquent, ils doivent forcément être maintenus en équilibre dans leur position initiale avant remplissage , par l'intermédiaire du câble de suspension, afin d'éviter qu'ils ne pivotent dans un plan vertical sous l'action de leur propre poids. Le remplissage du silo dans lequel est monté ce dispositif d'extraction est effectué en introduisant par gravité le produit en vrac devant être stocké , par une ouverture pratiquée au sommet du silo. Le produit en vrac ainsi introduit exerce une pression importante sur le support et la vis d'Archimède, ce qui provoque un accroissement important de la tension du câble de suspension, et par là-même de la tension que doit supporter le mât central. En outre, lorsque la vidange du silo est terminée, pour remettre le support et la vis d'Archimède en position initiale avant remplissage, il est nécessaire de les faire pivoter dans un plan vertical d'un angle d'environ 9O°, en enroulant le câble de suspension. Dans ce cas, le mât central doit également pouvoir résister à la tension exercée par ce câble de suspension, quel que soit l'angle d'inclinaison du support et de la vis d'Archimède par rapport au mât central, cette tension augmentant avec l'angle d'inclinaison. En conclusion, le mât central doit être suffisamment rigide et être suffisamment ancré verticalement pour résister à la tension du câble, celle-ci augmentant avec la capacité de stockage du silo et le poids de la vis d'Archimède et du support.

Dans le dispositif d'extraction du document EP.O.471.136, il est nécessaire, au démarrage de l'extraction , pour que la vis d'extraction puisse être mise en rotation autour de l'axe vertical du mât central, que cette vis soit dégagée du produit en vrac dans lequel elle est noyée. A cet effet, il est nécessaire d'une part que cette vis soit du type d'Archimède , et d'autre part qu'elle puisse être mise en rotation sur elle-même, de manière à évacuer le produit en vrac à destination de l'ouverture centrale de l'aire de stockage. Cette mise en rotation sur elle-même de la vis d'extraction, lorsqu'elle est noyée dans la masse, nécessite une puissance installée importante. Cette puissance installée doit être d'autant plus importante que le produit en vrac peut former des conglomérats qui s'opposent à cette mise en rotation.

En pratique, il s'avère que la mise en oeuvre d'un dispositif d'extraction tel que celui décrit dans le document EP.O.471.136 avec une vis d'Archimède dont la longueur excède 15mètres, est très difficile du fait d'une part des trop fortes tensions auxquelles sont soumis le câble de suspension et le mât central et d'autre part de la puissance installée nécessaire au démarrage de la vis d'extraction. Ce dispositif d'extraction est donc inadapté pour réaliser la vidange des silos ayant une capacité de stockage importante, et notamment de silos à base circulaire, dont le diamètre au sol excède 3Omètres.

Le but que se sont fixés les demandeurs est de proposer un dispositif qui permet l'extraction d'un produit en vrac, du type sucre en vrac, clinker, cendres volantes..., stocké sur une aire de stockage comportant au moins une ouverture d'évacuation, et qui pallie les inconvénients du dispositif d'extraction précité.

Ce but est atteint par le dispositif d'extraction de l'invention qui de manière connue comporte un arbre racleur inclinable et entraîné en rotation selon un premier axe de rotation vertical.

De manière caractéristique selon l'invention, le dispositif d'extraction comprend :
- une pièce dite de support , dont la base est montée rotative au-dessus de l'ouverture d'évacuation de l'aire de stockage, selon le premier axe de rotation, et dont l'embase est inclinée d'un angle β par rapport à l'horizontale;
- et des premiers moyens d'entraînement en rotation de la pièce support autour du premier axe de rotation ;
la base de l'arbre racleur est inclinée par rapport à l'axe de l'arbre racleur d'un angle α complémentaire de l'angle β, et est montée rotative sur l'embase de la pièce support selon un deuxième axe de rotation perpendiculaire à ladite embase;et le dispositif comprend en outre des deuxièmes moyens d'entraînement en rotation de l'arbre racleur autour du deuxième axe de rotation pour le réglage de l'inclinaison de cet arbre par rapport à la verticale d'un angle compris entre O et 9O°.

C'est le mérite des demandeurs d'avoir, dans un premier temps, mis en évidence que l'utilisation d'un mât central présentait des inconvénients qui limitaient la dimension des dispositifs d'extraction, et notamment de la vis d'Archimède d'extraction, et dans un deuxième temps d'avoir cherché à supprimer ce mât central, dont l'utilisation semblait jusqu'à présent indispensable, afin d'en éviter les inconvénients.

Certes, il était connu par le document FR.1.5O1.174 qui a pour objet un dispositif permettant la mise à la verticale d'une superstructure, du type mât de grue pylône, supportée par une substructure, d'utiliser des moyens similaires à ceux permettant l'inclinaison de l'arbre racleur du dispositif d'extraction de l'invention. Cependant , dans le cadre de ce document, la fonction technique de ces moyens est de permettre le réglage de l'inclinaison d'un mât par rapport à la verticale d'un angle de faible valeur, d'environ 7°, dans le but uniquement de mettre à la verticale ce mât, lorsque la substructure est sur un sol légèrement pentu. Ces moyens connus ont dans la présente invention une fonction nouvelle qui est de permettre le réglage de l'inclinaison de l'arbre racleur d'un angle compris entre O° et 9O°, et permettent de résoudre des problèmes qui ne se posaient pas dans le cadre de l'utilisation de ces moyens qui est décrite dans le document FR.1.5O1.174.

Les avantages procurés par le dispositif d'extraction de l'invention sont les suivants : les angles α et β étant complémentaires, il est possible de positionner l'arbre racleur dans un plan strictement vertical préalablement à l'entreposage du produit sur l'aire de stockage. S'agissant d'un dispositif d'extraction monté à l'intérieur d'un silo dont le sommet comporte une ouverture centrale, le produit en vrac qui est introduit par cette ouverture, lors du remplissage du silo, ne vient pas exercer sur l'arbre racleur une pression susceptible de l'incliner dans un plan vertical.

Par ailleurs au démarrage de l'extraction, pour dégager l'arbre racleur du dispositif d'extraction de l'invention qui est positionné dans un plan vertical, il suffit d'évacuer par gravité le produit en vrac par l'ouverture d'évacuation de l'aire de stockage. Contrairement au dispositif d'extraction du document EP.O.471.136, il n'est donc pas nécessaire que l'arbre racleur de l'invention soit une vis d'Archimède et qu'il puisse être mis en rotation sur lui-même.

Ainsi, contrairement à la vis d'Archimède du document EP.O.471.136, l'arbre racleur de l'invention n'a pas pour fonction première de pousser la matière par effet de vis en direction de l'ouverture d'évacuation , mais a pour fonction de racler la surface du produit selon un cône de renversement de plus en plus important, en sorte de provoquer l'acheminement régulier du produit en direction de l'ouverture d'évacuation, à chaque rotation unitaire de l'arbre racleur autour du premier axe de rotation. L'arbre racleur a également pour fonction de détruire les éventuels conglomérats , qui auraient pu se former au sein du produit en vrac ; ce phénomène de conglomération se produit par exemple lorsque le produit en vrac est du sucre stocké dans une atmosphère humide.

De préférence , les premiers et deuxièmes moyens d'entraînement en rotation sont constitués respectivement d'un premier groupe moteur entraînant en rotation une première couronne de roulement solidaire de la base de la pièce support, et d'un deuxième groupe moteur entraînant en rotation une deuxième couronne de roulement solidaire de la base de l'arbre racleur.

Afin que l'angle d'inclinaison de l'arbre racleur par rapport à la verticale puisse varier entre O et 9O°, par une rotation de 18O° de l'arbre racleur autour du deuxième axe de rotation, la mesure de l'angle α est égale à la mesure de l'angle β et vaut par conséquent 45°.

Selon un mode particulier de réalisation, le corps de l'arbre racleur comporte une spire hélicoïdale , ce qui permet d'avoir un acheminement plus régulier et homogène du produit en direction de l'ouverture d'évacuation.

De préférence dans ce mode particulier de réalisation, le corps de l'arbre est de forme tronconique.

Bien que ce ne soit pas la fonction première de l'arbre racleur, il peut s'avérer utile de pouvoir provoquer l'acheminement du produit en direction de l'ouverture d'évacuation de l'aire de stockage en utilisant l'effet de vis, comme cela est décrit dans le document EP.O.471.136. Cela permet d'obtenir un acheminement plus rapide du produit en direction de l'ouverture d'évacuation, et de briser plus facilement les éventuels conglomérats qui auraient pu se former au sein du produit en vrac. Par conséquent, une partie du corps de l'arbre racleur est avantageusement montée rotative selon l'axe de l'arbre racleur, lorsque celui-ci est réalisé selon le mode particulier de réalisation précité. Dans ce cas, le dispositif d'extraction de l'invention comprend également des troisièmes moyens d'entraînement en rotation de ladite partie rotative du corps de l'arbre racleur autour dudit axe.

L'utilisation de ces troisièmes moyens d'entraînement en rotation est particulièrement intéressante pour réaliser l'acheminement du produit par effet de vis, en direction de l'ouverture d'évacuation, lorsque l'arbre racleur est fortement incliné par rapport à la verticale, et notamment lorsqu'il est dans une position horizontale.

L'invention concerne également une aire de stockage de produits en vrac, comportant au moins une ouverture d'évacuation. De manière caractéristique, cette aire de stockage est équipée d'un dispositif d'extraction selon l'invention.

Pour une telle aire de stockage, sans autre moyen d'évacuation forcée du produit en vrac , il est nécessaire au début de la vidange d'effectuer une évacuation gravitaire du produit stocké notamment par l'ouverture d'évacuation, en sorte de libérer l'arbre racleur qui est en position verticale, et de pouvoir commencer à mettre en action les premiers et deuxièmes moyens d'entraînement en rotation.

Avantageusement, pour faciliter cette évacuation gravitaire , dans un premier mode particulier de réalisation, l'aire de stockage de l'invention comprend plusieurs ouvertures secondaires obturables pratiquées de part et d'autre de l'ouverture d'évacuation. L'obturation de ces ouvertures secondaires peut par exemple être commandée par l'intermédiaire d'électrovannes, dont l'action permet de régler dans une certaine mesure le débit du produit évacué gravitairement.

Selon un deuxième mode particulier de réalisation, l'aire de stockage est équipée de moyens de fluidisation du produit stocké. De tels moyens sont connus de l'homme du métier, et consistent par exemple en l'injection d'un flux d'air ascendant à travers une membrane poreuse disposée à la périphérie de l'ouverture d'évacuation. Le produit qui est ainsi fluidisé peut s'écouler plus facilement par gravité à travers l'ouverture d'évacuation.

On peut également concevoir un troisième mode particulier de réalisation de l'aire de stockage combinant les deux premiers modes particuliers précités.

Les trois premiers modes particuliers de réalisation précités sont particulièrement bien adaptés pour réaliser l'extraction d'un produit en vrac facilement extractible gravitairement, ce qui est le cas par exemple du sucre blanc, du clinker en poudre, ou des céréales. Cependant, il est inopérant pour des produits en vrac dont la consistance ne permet pas ou peu l'écoulement par gravité, ce qui est le cas du sucre roux en vrac. Il est donc nécessaire d'équiper l'aire de stockage de l'invention avec des moyens d'évacuation forcée du produit en vrac. A cet effet, selon un quatrième mode particulier de réalisation, l'aire de stockage de l'invention comprend en outre au moins une vis d'extraction sensiblement horizontale, montée rotative au-dessous de la base de la pièce support, et des quatrièmes et cinquièmes moyens d'entraînement en rotation de la vis d'extraction respectivement sur elle-même et autour du premier axe de rotation du dispositif d'extraction.

Au cours de sa rotation autour du premier axe de rotation, la vis d'extraction effectue un balayage de l'aire de stockage selon une zone circulaire. De plus , la rotation sur elle-même de la vis d'extraction permet de pousser jusqu'à l'ouverture d'évacuation, le produit situé dans cette zone circulaire. De la sorte, on peut réaliser un vidage par le bas de tout le produit en vrac situé à l'aplomb de cette zone circulaire.

S'agissant notamment d'un produit en vrac ne pouvant s'écouler par gravité, l'action de cette vis d'extraction permet avantageusement de dégager l'arbre racleur du dispositif d'extraction de l'invention au début de l'évacuation du produit en vrac. Par la suite, en cours d'extraction l'arbre racleur permet l'acheminement du produit en vrac jusque dans la zone située à l'aplomb de la zone circulaire balayée par la vis d'extraction. Celle-ci permet en outre la désagrégation des conglomérats qui auraient pu se former au sein du produit et qui n'auraient pas été complètement détruits par l'arbre racleur, et par là-même assure une régulation du débit du produit évacué.

Dans le quatrième mode particulier de réalisation précité, l'aire de stockage comporte de préférence une excavation, servant de logement à la vis d'extraction. De la sorte on est en mesure d'effectuer un balayage de l'aire de stockage sur deux niveaux ; le balayage du premier niveau supérieur est assuré par l'arbre racleur du dispositif d'extraction de l'invention, et le balayage du deuxième niveau inférieur , qui correspond au fond proprement dit de l'excavation est assuré par la vis d'extraction.

Dans un mode préféré de réalisation, l'aire de stockage sera constituée de la combinaison des modes particuliers de réalisation précités, ce qui permet d'avoir une aire de stockage polyvalente qui peut être utilisée pour le stockage de produits en vrac aptes à s'écouler gravitairement , tels que le sucre blanc en vrac, ainsi que pour le stockage de produits en vrac ne s'écoulant pas ou peu par gravité , tels que le sucre roux en vrac.

De plus , s'agissant d'une aire de stockage circulaire comportant une ouverture d'évacuation centrale , la longueur L de l'arbre racleur est de préférence sensiblement égale au rayon de l'aire de stockage. De la sorte, le dispositif d'extraction de l'invention permet une vidange complète de l'aire de stockage.

D'autres caractéristiques et avantages de l'invention ressortiront de la description suivante d'un mode particulier de réalisation d'une aire de stockage particulière , en l'occurrence le fond d'un silo dôme, donnée en référence au dessin annexé sur lequel :
- la figure 1 est une vue en coupe d'un silo dôme selon l'invention, en début de vidange,
- la figure 2 est une représentation en coupe du silo dôme de la figure 1, en cours de vidange ,
- la figure 3 est une représentation du silo dôme des figures 1 et 2 en fin de vidange,
- et la figure 4 est une représentation schématique des premiers , deuxièmes, quatrièmes et cinquièmes moyens d'entraînement en rotation.

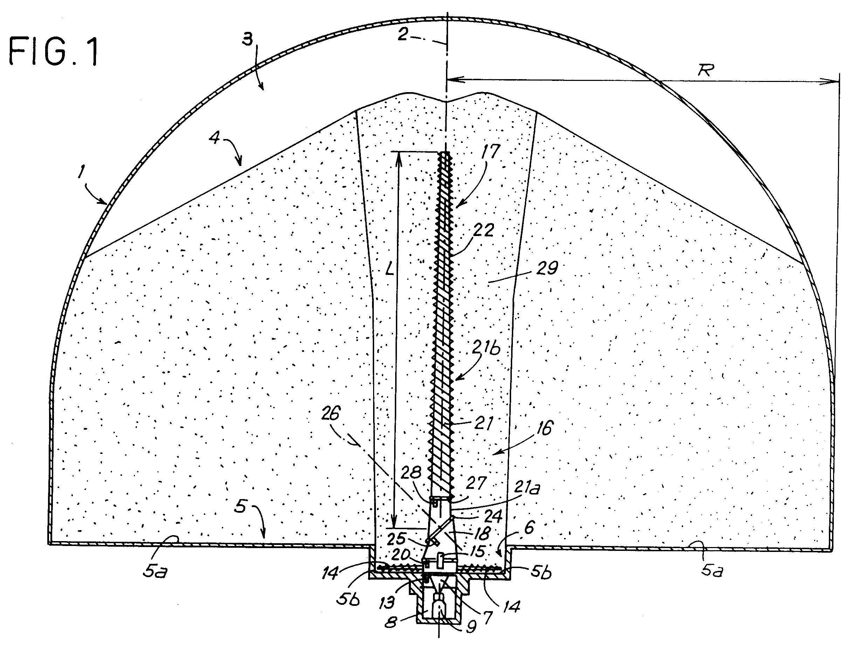

On a représenté schématiquement aux figures 1,2 et 3, un silo dôme 1 d'axe central 2, dont le volume intérieur 3 occupe au sol un disque de rayon R.

Un tel silo est utilisé pour le stockage de produits en vrac, tels que du sucre, clinker, céréales...

Son remplissage est effectué en introduisant par gravité le produit en vrac que l'on souhaite stocker temporairement, par une ouverture (non représentée) pratiquée dans le sommet du silo 1. A cet effet, le produit est acheminé à l'extérieur du silo à l'aide par exemple d'une bande transporteuse jusqu'à une trémie d'alimentation communiquant avec ladite ouverture. On réalise ainsi un amas 4 de produit en vrac plus ou moins régulier, qui peut éventuellement occuper tout le volume intérieur 3 du silo 1.

Le fond 5 du silo 1 comporte une excavation 6 centrale et circulaire. De la sorte , ce fond 5 est constitué d'une partie supérieure 5a horizontale, et d'une partie inférieure 5b horizontale qui correspond au fond proprement dit de l'excavation 6.

La partie inférieure 5b comporte une ouverture d'évacuation 7 centrale, qui communique avec une galerie souterraine 8, dans laquelle est montée une bande transporteuse 9. Cette ouverture d'évacuation 7 centrale sert au vidage du silo, le produit évacué étant ensuite acheminé à l'extérieur par la bande transporteuse 9.

La partie inférieure 5b comporte également plusieurs ouvertures d'évacuation secondaires (non représentées) obturables, dont la fermeture est commandée au moyen d'électrovannes , et qui sont disposées régulièrement de part et d'autre de l'ouverture d'évacuation 7 centrale, dans une direction parallèle à la direction générale de la bande transporteuse 9, c'est-à-dire dans une direction perpendiculaire au plan de coupe des figures 1 à 3. L'utilisation de telles ouvertures secondaires d'évacuation a déjà été décrite, notamment dans le document FR.2.339.557.

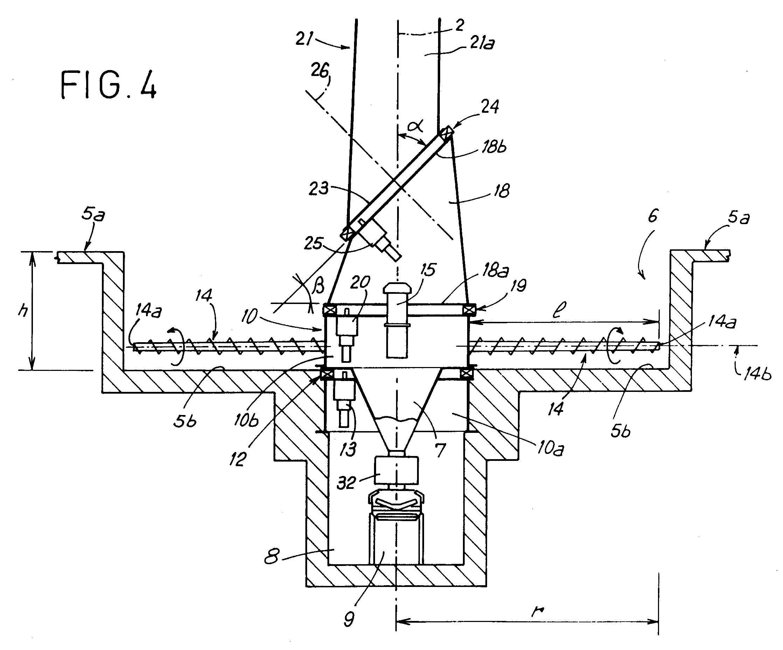

Si l'on se réfère à la figure 4, le silo 1 est équipé d'une tourelle 1O centrale, constituée de deux cylindres creux superposés 1Oa, 1Ob.

Le cylindre inférieur 1Oa est ancré solidement dans la partie inférieure 5b du fond 5 du silo 1 , au-dessus de l'ouverture d'évacuation 7 centrale.

Le cylindre supérieur 1Ob est monté rotatif selon l'axe central 2 du silo, sur le cylindre inférieur 1Oa, par l'intermédiaire d'une couronne de roulement 12, du type couronne à rouleaux. Cette couronne de roulement 12 est entraînée en rotation à l'aide d'un groupe moteur 13, du type moteur - réducteur qui est logé à l'intérieur du cylindre inférieur 1Oa.

Le cylindre supérieur 1Ob est équipé de deux vis d'extraction 14 identiques, du type vis d'Archimède ,et de longueur l. Ces deux vis sont fixées radialement à la périphérie du cylindre supérieur 1Ob en sorte qu'elles sont situées dans un même plan sensiblement horizontal , à proximité de la partie inférieure 5b du fond 5 du silo 1, et sont diamétralement opposées par rapport à l'axe central 2 du silo.

La distance séparant l'axe central 2 du silo 1, de l'extrémité 14a d'une vis d'extraction 14 est sensiblement égale au rayon r de la partie inférieure 5b du fond 5 du silo. L'excavation 6 fait ainsi office de logement aux deux vis d'extraction 14.

L'entraînement en rotation selon l'axe central 2 du silo 1 du cylindre supérieur 1Ob provoque la rotation des vis d'extraction 14 dans un plan sensiblement horizontal, les vis d'extraction 14 effectuant par là-même un balayage de la totalité de la partie inférieure 5b.

La tourelle 1O est également équipée d'un groupe moteur 15 permettant l'entraînement simultané en rotation des deux vis d'extraction 14 sur elles-mêmes, c'est-à-dire selon un même axe 14b horizontal.

Les deux groupes moteurs 13 et 15 étant indépendants , les deux mouvements de rotation des vis d'extraction 14 peuvent donc avoir des vitesses différentes.

Le silo 1 de la figure 1 est également équipé d'un dispositif d'extraction 16 constitué notamment d'un arbre racleur 17 inclinable et de longueur L, et d'une pièce support 18 creuse.

Si l'on se réfère à la figure 4, la base 18a de la pièce support 18 est montée rotative selon l'axe central 2 du silo, sur le cylindre supérieur 10b de la tourelle 1O , par l'intermédiaire d'une couronne de roulement 19, du type couronne à rouleaux. Cette couronne de roulement 19 est entraînée en rotation selon l'axe central 2 du silo par l'intermédiaire d'un groupe moteur 2O, du type moteur - réducteur, logé à l'intérieur du cylindre supérieur 1Ob. Le groupe moteur 2O par l'intermédiaire de la couronne de roulement 19 permet donc l'entraînement en rotation sur elle-même de la pièce support 18.

La face supérieure de cette pièce support 18 constitue une embase 18b, inclinée d'un angle β par rapport à l'horizontale.

Si l'on se réfère à la figure 1, l'arbre racleur 17 est constitué d'un corps 21 creux de forme tronconique et qui peut être réalisé en acier. Ce corps 21 est constitué d'une partie inférieure 21a lisse et d'une partie supérieure 21b dont la surface extérieure est pourvue d'une spire hélicoïdale 22.

La base 23 de l'arbre racleur 17 correspond à la face inférieure du corps 21 tronconique représenté à la figure 4, et est inclinée d'un angle α par rapport à l'axe du corps tronconique 21. Cette base 23 repose sur l'embase 18b de la pièce support 18 par l'intermédiaire d'une couronne de roulement 24, du type couronne à rouleaux, en sorte que l'axe du corps 21 tronconique de l'arbre racleur 17 coïncide avec l'axe central du silo, lorsque l'arbre racleur est dans une position verticale , comme cela est représenté aux figures 1 et 4.

La couronne de roulement 24 est entraînée en rotation par l'intermédiaire d'un groupe moteur 25 du type moteur - réducteur, qui est logé à l'intérieur de la pièce support 18.

Ce groupe moteur 25 permet par l'intermédiaire de la couronne de roulement 24 de mettre en rotation la partie inférieure 21a du corps 21 tronconique, et par là-même l'ensemble de l'arbre racleur 17 autour d'un axe 26 perpendiculaire à l'embase 18b de la pièce support 18. Cet entraînement en rotation de l'arbre racleur 17 autour de cet axe 26, de par les angles d'inclinaison α et β , a pour effet de provoquer l'inclinaison de cet arbre racleur 17 par rapport à l'axe central 2 du silo 1. Dans le mode particulier de réalisation de la figure 4, la mesure des angles α et β vaut 45°. De la sorte, l'inclinaison de l'arbre racleur 17 par rapport à l'axe central 2 du silo peut être réglée entre O et 9O°, par une rotation de 180° de l'arbre racleur 17.

La pièce support 18 est dimensionnée pour que le filetage hélicoïdal 22 de l'arbre racleur 17 soit quasiment en contact avec la partie supérieure 5a du fond du silo, lorsque l'angle d'inclinaison de l'arbre racleur vaut 9O°. Il est à noter à ce sujet que le corps 21 du racleur a tendance à fléchir sous l'action de son propre poids , et du poids de la spire hélicoïdale 22, lorsque l'arbre racleur est suffisamment incliné. Il est donc possible d'utiliser ce fléchissement pour compenser la forme tronconique du corps 21, afin que la spire hélicoïdale puisse être parallèle à la partie inférieure 5a du fond 5 du silo, ce qui permet d'obtenir une vidange du silo plus complète.

La partie supérieure 21b du corps 21 tronconique de l'arbre racleur 17 est également montée rotative par rapport à la partie inférieure 21a, par l'intermédiaire d'une couronne de roulement 27. Cette couronne de roulement est entraînée en rotation par l'intermédiaire d'un groupe moteur 28, du type moteur - réducteur, logé à l'intérieur de la partie inférieure 21a du corps 21 tronconique . Le groupe moteur 28 permet par l'intermédiaire de la couronne de roulement 27 , l'entraînement en rotation de la partie supérieure 21b de l'arbre racleur 17, selon l'axe du corps tronconique 21 de l'arbre racleur 17.

Dans un exemple précis de réalisation , le rayon R de la base du silo 1, était sensiblement égal à la longueur L de l'arbre racleur 17, et valait environ 3O mètres . Le rayon r de l'excavation 6 était d'environ 5mètres, pour une hauteur h de l'excavation d'environ 2mètres. La longueur l d'une vis d'extraction 14 était d'environ 4mètres.

L'utilisation de couronnes de roulement, permet d'obtenir un montage des différentes pièces les unes par rapport aux autres, rotatif et étanche. De la sorte, les groupes moteurs 13,15, 2O,25, et 28 , qui sont logés à l'intérieur d'une cavité intérieure délimitée par les cylindres inférieur 1Oa et supérieur 1Ob de la tourelle 1O, et par la pièce support 18, et la partie inférieure 21a du corps 21 tronconique, ne sont jamais en contact avec le produit en vrac, et ne subissent aucune pression de la part de ce produit. De plus , ces différents groupes moteurs , de par leur localisation à l'intérieur de ladite cavité sont très facilement accessibles , par la galerie souterraine 8. Les opérations de maintenance ou de réparation de ces différents groupes moteurs sont alors plus facile à réaliser.

Le silo qui vient d'être décrit, peut être utilisé pour le stockage temporaire de produits en vrac de toutes sortes, c'est-à-dire de produits en vrac du type sucre blanc, qui peuvent être évacués par gravité, ou du type sucre roux , dont l'évacuation gravitaire n'est pas réalisable du fait de leur consistance . Le principe de vidange du silo 1 qui va être à présent décrit sera fonction du produit en vrac stocké.

Le principe de vidange du silo 1 dans lequel est stocké un produit en vrac difficilement extractible par gravité , du type sucre roux est le suivant.

Initialement l'arbre racleur 17 est en position verticale, comme cela est représenté à la figure 1, et se trouve en l'occurrence noyé dans la masse du produit en vrac. Dans une première étape, on commence par effectuer une évacuation par le bas du produit en vrac situé à l'aplomb de l'excavation 6, c'est-à-dire si l'on se réfère à la figure 1, du produit en vrac contenu dans une zone 29 formant une cheminée sensiblement verticale. Cette évacuation par le bas est réalisée en entraînant en rotation les deux vis d'extraction 14 selon leur axe horizontal 14b, et selon l'axe central 2 du silo 1, par l'intermédiaire respectivement du groupe moteur 15 et de l'ensemble groupe moteur 13 - couronne de roulement 12. La double rotation des deux vis d'extraction 14 permet d'une part d'effectuer un balayage de la totalité du fond de l'excavation 6, c'est-à-dire de la partie inférieure 5b du fond 5 du silo, et d'autre part de pousser le produit en vrac, sous l'effet de vis, jusqu'à l'ouverture d'évacuation 7 centrale, à travers laquelle il peut s'écouler jusqu'à la bande transporteuse 9 pour être ensuite acheminé à l'extérieur du silo. Si le produit en vrac a subi une conglomération au cours de son stockage, il peut arriver que l'action des deux vis d'extraction crée une voûte à la base de la zone 29. Cependant, étant donné l'importance de la pression exercée sur cette voûte par le produit en vrac situé à l'aplomb de l'excavation 6, celle-ci s'écroule rapidement, et les vis d'extraction 14 continuent l'évacuation du produit en vrac par le bas.

Cette première étape d'évacuation par le bas du produit en vrac crée au sein de la zone 29 un cône de renversement, qui permet de dégager l'arbre racleur 17. Dans une deuxième étape,lorsque l'arbre racleur 17 est suffisamment dégagé, on l'entraîne en rotation autour de l'axe central 2 du silo et par l'intermédiaire du groupe moteur 2O et de la couronne de roulement 19. Puis on augmente progressivement l'inclinaison de cet arbre racleur 17 par rapport à l'axe central 2 du silo, en le mettant lentement en rotation selon l'axe 26.

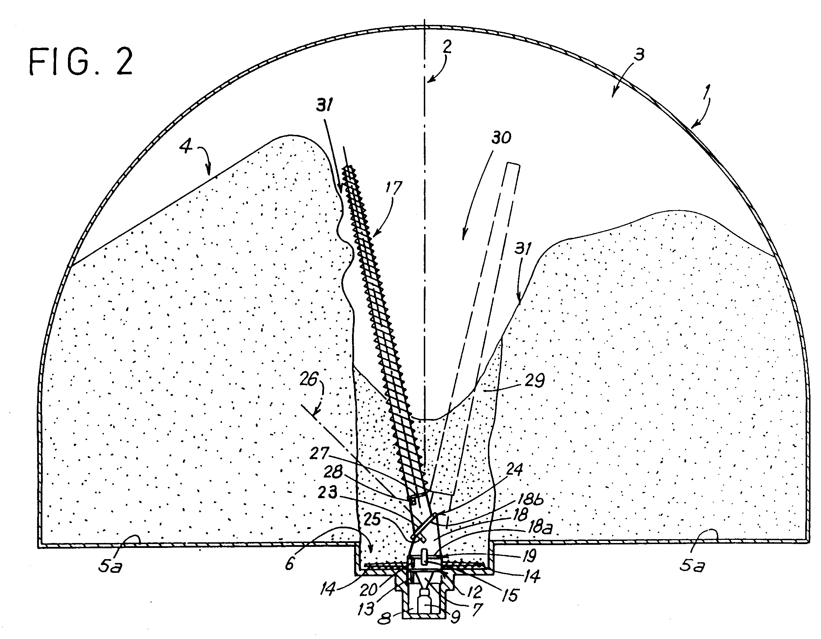

Si l'on se réfère à la figure 2, l'arbre racleur 17 au cours de sa rotation autour de l'axe central 2 du silo déstabilise l'amas 4 de produit en vrac, en raclant la surface 31 du cône de renversement 3O qui s'est créé au sein de cet amas. Lorsque l'arbre racleur 17 est peu incliné par rapport à l'axe central 2 du silo, son action provoque principalement l'éboulement par gravité du produit en vrac jusqu'à la zone 29 située à l'aplomb de l'excavation 6. Pendant ce temps, les vis d'extraction 14 continuent leur action et permettent une évacuation régulée du produit en vrac situé dans la zone 29.

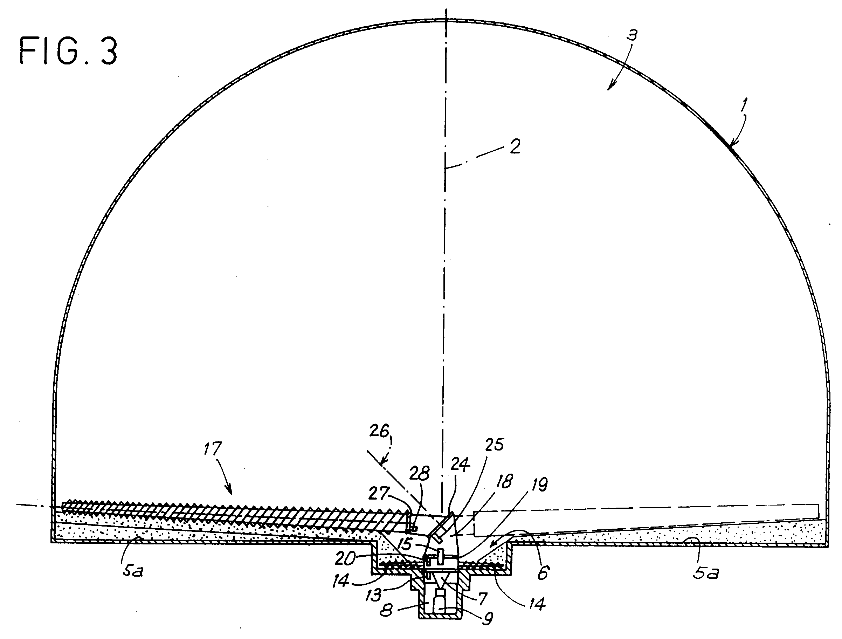

A partir d'un angle d'inclinaison plus important , dont la valeur dépend de la consistance du produit en vrac, l'arbre racleur 17 ne permet plus en pratique un éboulement du produit en vrac, mais assure un acheminement progressif du produit en vrac en direction de l'excavation 6; l'avancement du produit en vrac à chaque rotation unitaire de l'arbre racleur correspond à peu près au pas de la spire hélicoidale 22. Cet acheminement progressif du produit en vrac est notamment réalisé lorsque l'arbre racleur 17 est dans une position proche de l'horizontale comme cela est représenté à la figure 3. Dans ce cas , la vidange du silo est pratiquement terminée.

Il est également avantageux à partir d'un certain angle d'inclinaison de l'arbre racleur 17 de mettre en rotation la partie supérieure 21a du corps 21 de l'arbre racleur par l'intermédiaire du groupe moteur 28 et de la couronne de roulement 27, afin notamment d'accélérer la vidange du silo, en poussant sous l'effet de vis le produit en vrac en direction de l'excavation 6.

Pour réaliser l'évacuation d'un produit en vrac extractible par gravité, il n'est pas nécessaire comme cela vient d'être décrit d'utiliser les vis d'extraction 14. Le principe de vidange est alors le suivant. On commence par effectuer une évacuation gravitaire du produit en vrac par l'ouverture d'évacuation 7 centrale , et éventuellement par les ouvertures d'évacuation secondaires (non représentées). Cette évacuation gravitaire a pour effet de provoquer un cône de renversement qui permet de dégager l'arbre racleur 17 qui est en position verticale, comme cela est représenté à la figure 1. Ensuite, on met en action l'arbre racleur 17 comme cela a été précédemment décrit. Tout le produit en vrac qui est situé à l'aplomb de l'excavation 6 est donc, dans ce principe de fonctionnement, évacué gravitairement. Il est alors possible d'effectuer une régulation de cette évacuation gravitaire, en commandant l'obturation de l'ouverture d'évacuation 7 et éventuellement des ouvertures secondaires , à l'aide d'électrovannes. Il est également possible de combiner les deux principes d'évacuation qui viennent d'être décrits en utilisant au cours d'une même vidange, l'évacuation gravitaire , ou l'évacuation par le bas à l'aide des vis d'extraction 14.

Le silo peut également comporter des moyens de ventilation forcée 32, permettant l'injection d'un flux d'air ascendant à travers l'ouverture d'évacuation 7, en sorte de fluidiser le produit en vrac situé à proximité de l'ouverture d'évacuation 7, ce qui rend plus facile son évacuation gravitaire.

Il est également possible sans sortir du cadre de l'invention de pratiquer des ouvertures dans le corps 21 tronconique, et notamment dans sa partie supérieure 21b, et d'injecter de l'air sous pression à l'intérieur du corps 21 creux. Dans ce cas l'air qui est évacué par lesdites ouvertures, contribue à la déstabilisation de l'amas 4 de produit en vrac, et rend plus facile l'éboulement du produit.

Il revient à l'homme du métier de dimensionner la puissance installée nécessaire pour faire fonctionner l'arbre racleur 17 et les deux vis d'extraction 14, en fonction de leur taille et de la masse du produit pouvant être stockée dans le silo dôme. A ce sujet , il est à noter que les vis d'extraction 14 travaillant dans la masse du produit , contrairement à l'arbre racleur 17, il est préférable que la dimension de ces vis soit faible , par rapport à la dimension de l'arbre racleur, afin de réduire la puissance installée.

Par ailleurs il est également possible dans le cadre de l'invention de remplacer le système des vis d'extraction 14, permettant de réaliser une évacuation régulée par le bas du produit en vrac, par tout autre système remplissant la même fonction.

## Revendications

1. Dispositif d'extraction (16) comportant un arbre racleur (17) inclinable et entraîné en rotation selon un premier axe de rotation vertical, et permettant l'extraction d'un produit en vrac, du type sucre en vrac, clinker, cendres volantes..., stocké sur une aire de stockage ayant au moins une ouverture d'évacuation (7), caractérisé en ce qu'il comprend :
- une pièce (18) dite de support, dont la base (18a) est montée rotative au-dessus de l'ouverture d'évacuation (7), selon le premier axe de rotation, et dont l'embase (18b) est inclinée d'un angle β par rapport à l'horizontale,
- et des premiers moyens d'entraînement en rotation de la pièce support autour du premier axe de rotation,
en ce que la base (23) de l'arbre racleur (17) est inclinée, par rapport à l'axe de l'arbre racleur, d'un angle α complémentaire de l'angle β, et est montée rotative sur l'embase (18b) selon un deuxième axe de rotation perpendiculaire à ladite embase, et en ce que le dispositif d'extraction comprend en outre des deuxièmes moyens d'entraînement en rotation de l'arbre racleur (17) autour du deuxième axe de rotation, pour le réglage de l'inclinaison de cet arbre par rapport à la verticale , d'un angle compris entre O et 9O°.

2. Dispositif d'extraction selon la revendication 1 caractérisé en ce que les premiers moyens d'entraînement en rotation sont constitués d'un premier groupe moteur (2O) entraînant en rotation une première couronne de roulement (19) solidaire de la base (18a) de la pièce support (18), et les deuxièmes moyens d'entraînement en rotation sont constitués d'un deuxième groupe moteur (25) entraînant en rotation une deuxième couronne de roulement (24) solidaire de la base (23) de l'arbre racleur (17).

3. Dispositif d'extraction selon les revendications 1 ou 2 caractérisé en ce que la mesure des angles α et β vaut 45°.

4. Dispositif d'extraction selon l'une quelconque des revendications 1 à 3 caractérisé en ce que le corps (21) de l'arbre racleur (17) comporte une spire hélicoïdale (22).

5. Dispositif d'extraction selon la revendication 4 caractérisé en ce que le corps (21) de l'arbre racleur (17) est de forme tronconique.

6. Dispositif d'extraction selon les revendications 4 ou 5 caractérisé en ce qu'une partie du corps (21) de l'arbre racleur (17) est montée rotative selon l'axe de l'arbre racleur, et en ce que le dispositif d'extraction comprend en outre des troisièmes moyens d'entraînement en rotation (27,28) de ladite partie rotative autour dudit axe.

7. Aire de stockage de produits en vrac, comportant au moins une ouverture d'évacuation (7) caractérisée en ce qu'elle comprend un dispositif d'extraction (16) selon l'une quelconque des revendications 1 à 6.

8. Aire de stockage selon la revendication 7, caractérisée en ce qu'elle comprend en outre plusieurs ouvertures secondaires obturables pratiquées de part et d'autre de l'ouverture d'évacuation (7).

9. Aire de stockage selon les revendications 7 ou 8 caractérisée en ce qu'elle est équipée de moyens de fluidisation du produit en vrac stocké.

10. Aire de stockage selon l'une quelconque des revendications 7 à 9, caractérisée en ce qu'elle comprend en outre au moins une vis d'extraction (14) sensiblement horizontale , montée rotative au-dessous de la base (18a) de la pièce support (18), et des quatrièmes (15) et cinquièmes (12,13) moyens d'entraînement en rotation de la vis d'extraction (14) respectivement sur elle-même et autour du premier axe de rotation du dispositif d'extraction.

11. Aire de stockage selon la revendication 1O caractérisée en ce qu'elle comporte une excavation (6), servant de logement à la vis d'extraction (14).

12. Aire de stockage selon l'une quelconque des revendications 7 à 11 caractérisée en ce que l'ouverture d'évacuation (7) étant centrale, et l'aire de stockage circulaire, la longueur L de l'arbre racleur (17) est sensiblement égale au rayon de l'aire de stockage.

## Claims

1. An extraction device (16) comprising an inclinable scraper shaft (17) driven in rotation along a first vertical axis of rotation, and allowing the extraction of a bulk product, of the bulk sugar, clinker, fly ash ... type, stored over a storage area having at least one evacuation opening (7), characterised in that the extraction device comprises:
- a so-called support piece (18), whose foundation (18a) is mounted to rotate above the evacuation opening (7), along the first axis of rotation and whose base (18b) is inclined by an angle β with respect to the horizontal;
- and first means for driving the support piece in rotation about the first axis of rotation,
in that the foundation (23) of the scraper shaft (17) is inclined with respect to the axis of the scraper shaft by an angle α complementary of angle β and is mounted to rotate on the base (18b) along a second axis of rotation perpendicular to said base, and in that the extraction device further comprises second means for driving the scraper shaft (17) in rotation about the second axis of rotation for adjusting the inclination of this shaft with respect to the vertical by an angle included between 0° and 90°.

2. The extraction device according to claim 1, characterised in that the first means for driving in rotation are constituted by a first drive unit (20) rotating a first roller ring (19) fast with the foundation (18a) of the support piece (18), and the second means for driving in rotation are constituted by a second drive unit (25) rotating a second roller ring (24) fast with the foundation (23) of the scraper shaft (17).

3. The extraction device according to claims 1 or 2, characterised in that angles α and β measure 45°.

4. The extraction device according to any one of claims 1 to 3, characterised in that the body (21) of the scraper shaft (17) comprises a helicoidal turn (22).

5. The extraction device according to claim 4, characterised in that the body (21) of the scraper shaft (17) is truncated in shape.

6. The extraction device according to claims 4 or 5, characterised in that a part of the body (21) of the scraper shaft (17) is mounted to rotate along the axis of the scraper shaft, and in that the extraction device further comprises third means (27, 28) for rotating said rotatable part about said axis.

7. An area for storing bulk products, comprising at least one evacuation opening (7), characterised in that it comprises an extraction device (16) according to any one of claims 1 to 6.

8. The storage area according to claim 7, characterised in that it further comprises a plurality of obturatable secondary openings made on either side of the evacuation opening (7).

9. The storage area according to claims 7 or 8, characterised in that it is equipped with means for fluidising the bulk product stored.

10. The storage area according to any one of claims 7 to 9, characterised in that it further comprises at least one substantially horizontal extraction screw (14) mounted to rotate below the foundation (18a) of the support piece (18), and fourth (15) and fifth (12, 13) means for driving the extraction screw (14) respectively in rotation on itself and about the first axis of rotation of the extraction device.

11. The storage area according to claim 10, characterised in that it comprises an evacuation (6) serving as housing for the extraction screw (14).

12. The storage area according to any one of claims 7 to 11, characterised in that the evacuation opening (7) being central, and the storage area circular, the length L of the scraper shaft (17) is substantially equal to the radius of the storage area.

## Patentansprüche

1. Fördervorrichtung (16) mit einem Abstreiferarm (17), der neigbar und entsprechend einer ersten vertikalen Drehachse drehend angetrieben wird und die Förderung eines Produkts in loser Form wie beispielsweise Zucker, Klinker, Flugasche... in loser Form erlaubt, das auf einem Lagerplatz gelagert wird, der mindestens eine Austragöffnung (7) hat, dadurch gekennzeichnet, daß sie umfaßt:
- ein sogenanntes Stützelement (18), dessen unteres Ende (18a) entsprechend der ersten Drehachse drehend über der Austragöffnung (7) montiert ist, und dessen Sockel (18b) zur Horizontalen in einem Winkel β geneigt ist,
- und erste Vorrichtungen zum Drehantrieb des Stützelements um die erste Drehachse,
dadurch, daß der Boden (23) des Abstreiferarms (17) bezüglich der Achse des Abstreiferarms in einem zu dem Winkel β komplementären Winkel α geneigt und drehend an den Sockel (18b) entsprechend einer zweiten, zu dem Sockel senkrechten Drehachse montiert ist, sowie dadurch, daß die Fördervorrichtung außerdem zweite Vorrichtungen zum Drehantrieb des Abstreiferarms (17) um die zweite Drehachse umfaßt, und zwar zur Regulierung der Neigung dieses Arms in einem Winkel von 0 bis 90° bezüglich der Vertikalen.

2. Fördervorrichtung nach Anspruch 1, dadurch gekennzeichnet, daß die ersten Drehantriebsvorrichtungen aus einem ersten Antriebsaggregat (20) bestehen, das einen ersten Laufkranz (19) drehend antreibt, der fest mit dem unteren Ende (18a) des Stützelements (18) verbunden ist, und daß die zweiten Drehantriebsvorrichtungen aus einem zweiten Antriebsaggregat (25) bestehen, das einen zweiten Laufkranz (24) antreibt, der fest mit dem Boden (23) des Abstreiferarms (17) verbunden ist.

3. Fördervorrichtung nach den Ansprüchen 1 oder 2, dadurch gekennzeichnet, daß das Maß der Winkel α und β 45° beträgt.

4. Fördervorrichtung nach einem der Ansprüche 1 bis 3, dadurch gekennzeichnet, daß der Körper (21) des Abstreiferarms (17) eine spiralförmige Windung (22) umfaßt.

5. Fördervorrichtung nach Anspruch 4, dadurch gekennzeichnet, daß der Körper (21) des Abstreiferarms (17) kegelstumpfförmig ist.

6. Fördervorrichtung nach den Ansprüchen 4 oder 5, dadurch gekennzeichnet, daß ein Teil des Körpers (21) des Abstreiferarms (17) drehbar nach der Achse des Abstreiferarms (17) montiert ist, und daß die Fördervorrichtung außerdem dritte Vorrichtungen zum Drehantrieb (27, 28) des drehbaren Teils um diese Achse umfaßt.

7. Lagerplatz für Produkte in loser Form, der mindestens eine Austragöffnung (7) aufweist, dadurch gekennzeichnet, daß er eine Fördervorrichtung (16) nach einem der Ansprüche 1 bis 6 aufweist.

8. Lagerplatz nach Anspruch 7, dadurch gekennzeichnet, daß er außerdem mehrere verschließbare Zweitöffnungen aufweist, die beidseits der Austragöffnung (7) angeordnet sind.

9. Lagerplatz nach den Ansprüchen 7 oder 8, dadurch gekennzeichnet, daß er mit Vorrichtungen zur Fluidisation des gelagerten losen Produkts ausgerüstet ist.

10. Lagerplatz nach einem der Ansprüche 7 bis 9, dadurch gekennzeichnet, daß er außerdem eine im wesentlichen horizontale Förderschnecke (14) aufweist, die drehbar unter dem unteren Ende (18a) des Stützelements (18) montiert ist, sowie vierte (15) und fünfte (12, 13) Vorrichtungen zum Drehantrieb der Förderschnecke (14) um ihre eigene bzw. die erste Drehachse der Fördervorrichtung.

11. Lagerplatz nach Anspruch 10, dadurch gekennzeichnet, daß er außerdem eine Ausnehmung (6) aufweist, die der Förderschnecke (14) als Aufnahmeraum dient.

12. Lagerplatz nach einem der Ansprüche 7 bis 11, dadurch gekennzeichnet, daß, wenn die Austragöffnung (7) mittig angeordnet und der Lagerplatz rund ist, die Länge L des Abstreiferarms (17) im wesentlichen gleich dem Radius des Lagerplatzes ist.
